# FASCICULE DE BREVET EUROPEEN

(11) **EP 2 394 046 B1**
(45) Date de publication et mention de la délivrance du brevet: **13.02.2019**
(21) Numéro de dépôt: 10701841.8
(22) Date de dépôt: 19.01.2010
(51) Int. Cl.: B23K 35/30, F02M 26/29, C22C 19/05, C22C 38/04, C22C 38/02, C22C 38/18, C22C 38/12, F28F 9/00, F28F 21/08, B23K 103/04, F02M 26/11, B23K 101/14

(54) **ECHANGEUR DE CHALEUR POUR GAZ, NOTAMMENT LES GAZ D'ECHAPPEMENT D'UN MOTEUR**
GASWÄRMEAUSTAUSCHER, IM BESONDEREN FÜR MOTORABGASE
GAS HEAT EXCHANGER, IN PARTICULAR FOR ENGINE EXHAUST GASES

(30) Priorité: 03.02.2009 ES 200900296
(43) Date de publication de la demande: 14.12.2011
(73) Titulaire: Valeo Termico S.A., 50011 Zaragoza (ES)
(72) Inventeur: GRACIA, Benjamin, E-50009 Zaragoza (ES)
(74) Mandataire: Metz, Gaëlle
(86) Numéro de dépôt international: PCT/EP2010/050568
(87) Numéro de publication internationale: WO 2010/089185

(56) Documents cités:
- EP-A1- 1 471 158
- EP-A2- 1 155 769
- WO-A1-00/49191
- CN-A- 1 367 368
- US-A- 5 512 239
- US-A1- 2004 191 109
- "Austenitic steel with good high temp. strength and hot workability - comprises carbon, silicon , manganese , chromium , nickel , copper , niobium, boron, nitrogen, aluminium , zirconium , molybdenum, tungsten and iron" DATABASE WPI, 30 mai 1995 (1995-05-30), XP002965605

## Description

La présente invention concerne un échangeur de chaleur, notamment pour des gaz d'échappement d'un moteur.

L'invention trouve une application particulière dans les échangeurs de chaleur destinés à être disposés sur la ligne de recirculation de gaz d'échappement (ces échangeurs étant également connus sous leur dénomination anglaise EGRc) d'un moteur.

### ARRIÈRE-PLAN DE L'INVENTION

Dans certains échangeurs de chaleur utilisés pour le refroidissement de gaz, par exemple ceux utilisés dans des systèmes de recirculation des gaz d'échappement vers l'admission d'un moteur à explosion, les deux milieux d'échange de chaleur sont séparés par une paroi.

L'échangeur de chaleur proprement dit peut présenter plusieurs configurations différentes : à titre d'exemple, il peut être composé d'une carcasse (ou boîtier) à l'intérieur de laquelle est disposé un faisceau d'échange de chaleur comportant une série de tubes parallèles pour le passage des gaz, le réfrigérant circulant dans la carcasse à l'extérieur des tubes. Dans un autre mode de réalisation, l'échangeur comporte un faisceau composé notamment par une série de plaques parallèles formant les surfaces d'échange de chaleur, les gaz d'échappement et le réfrigérant circulant alors entre deux plaques, en couches alternées.

Dans le cas d'échangeurs de chaleur comportant faisceau d'échange de chaleur muni de tubes, la jonction entre les tubes et la carcasse peut être de différents types. D'une façon générale, les tubes sont fixés par leurs extrémités entre deux plaques de support (ou plaques collectrices) couplées à chaque extrémité de la carcasse, les deux plaques de support présentant une pluralité d'orifices pour la mise en place des tubes respectifs. Lesdites plaques de support sont elles-mêmes fixées à des moyens de raccord à la ligne de recirculation.

Lesdits moyens de raccord peuvent consister en un raccord en V ou bien un rebord périphérique de raccord ou bride, en fonction de la conception de la ligne de recirculation à laquelle l'échangeur est raccordé. Dans certains cas, la plaque de support est formée d'une seule pièce avec les moyens de raccord, en constituant une bride de raccord unique. Les moyens de raccord peuvent également consister en un réservoir de gaz monté à une extrémité de la carcasse, ou aux deux.

Dans la pratique, les échangeurs de chaleur pour le refroidissement des gaz d'échappement recirculés (ou EGRc) sont métalliques et généralement fabriqués en acier inoxydable austénitique, à savoir, dans la majorité des cas, l'acier AISI 304.

Tous les composants des échangeurs comportant faisceau d'échange de chaleur muni de tubes comme ceux des échangeurs à plaques empilées sont métalliques, de sorte que les échangeurs sont assemblés par des moyens mécaniques puis soudés au four pour assurer un niveau d'étanchéité adéquat pour l'application envisagée.

On connaît des brides de raccord fabriquées en acier AISI 304 austénitique à l'instar des autres composants. Ces brides sont toutefois souvent relativement grosses, leur épaisseur variant de 3 à 8 mm, d'où une augmentation sensible de leur coût du fait de la présence de nickel dans ces derniers. Pour en réduire le coût, il est également possible d'utiliser un matériau moins noble comme des alliages ferritiques ne contenant pas de nickel.

L'utilisation d'alliages d'acier inoxydable ferritiques est connue dans l'industrie de l'automobile. Les composants de la ligne de gaz d'échappement sont usuellement fabriqués à partir d'un certain alliage d'acier inoxydable ferritique, tel que l'acier AISI 409, l'acier AISI 430 ou un acier similaire.

On connaît un échangeur dont les brides sont fabriquées en acier inoxydable ferritique AISI 430. Dans ce cas, ces brides ne sont pas soudées au four avec les autres composants, tels qu'un réservoir de gaz ou un tube de dérivation, mais sont soudées à l'arc ou au laser.

On connaît également un autre échangeur dont la bride est fabriquée en acier inoxydable ferritique fritté, tel que l'acier AISI 409, la jonction de la bride au tube de dérivation ne se faisant toutefois pas par soudure d'un type quelconque, mais par voie mécanique au moyen d'un collier de serrage.

On connaît aussi un autre échangeur dont la bride est fabriquée en acier inoxydable ferritique. Cette bride est soudée au four au tube de raccord en utilisant du cuivre comme matière de soudure, la jonction soudée au four étant toutefois alors masquée et non exposée aux gaz d'échappement.

Le brevet JP 2004202547 concerne un échangeur de chaleur fabriqué en acier inoxydable ferritique avec une couche de couverture en nickel. Les composants sont joints par soudure au four à haute température.

Le brevet WO 2007057099 concerne un échangeur de chaleur fabriqué à partir d'un acier ferritique.

D'autres brevets, tels que EP 0306578, US4461811 ou US4261739, concernent des aciers inoxydables ferritiques offrant de meilleures propriétés à haute température ou une meilleure soudure au four si la soudure se fait au cuivre auquel on ajoute du titane ou du niobium.

En ce qui concerne les échangeurs chaleur pour le refroidissement des gaz d'échappement recirculés (ou EGRc), une matière de soudure très répandue pour la soudure au four est l'alliage NI 102 contenant du bore (BNi2). Cet alliage bon marché est le plus utilisé pour la soudure au four d'échangeurs en acier inoxydable, notamment pour la soudure au four sous vide.

Divers essais utilisant des alliages commerciaux ont montré qu'un acier inoxydable ferritique, tel que l'acier AISI 430 ou l'acier AISI 409, contenait une petite quantité d'azote pas excessive (environ 0,05 %) mais suffisante pour réagir avec le bore de la matière de soudure et entraver ainsi la soudure au four. L'azote est en fait présent lors du raffinage de l'acier, si bien qu'il est impossible de l'éliminer complètement.

L'azote étant par ailleurs difficile à analyser, il est rarement indiqué dans le matériau certifié. Dans le cadre de tests passés, l'analyse de nitrogène a produit des résultats différents selon la technique d'analyse utilisée : chimique, combustion LECO ou SEM.

Des tests réalisés avec l'acier AISI 430 ont donné lieu à des résultats négatifs et variables pour la soudure au four utilisant comme matière de soudure l'alliage NI 102. Une analyse au microscope SEM a par ailleurs révélé la présence locale d'azote, qui pose le problème de la formation de nitrures de bore affectant la soudure au four.

### DESCRIPTION DE L'INVENTION

La présente invention a pour objet un échangeur de chaleur visant à remédier aux inconvénients des échangeurs connus dans la technique, en offrant une bonne résistance à l'oxydation et à la corrosion de l'acier et en garantissant ainsi une soudure adéquate au four.

L'échangeur de chaleur notamment pour des gaz d'échappement recirculés d'un moteur, objet de la présente invention, comprend un faisceau d'échange de chaleur fabriqué à partir d'un acier inoxydable, destiné à la circulation des gaz avec échange de chaleur avec un fluide réfrigérant, et au moins une bride de raccord à la ligne de recirculation de gaz fabriquée à partir d'un acier inoxydable ferritique, ladite bride étant assujettie audit faisceau d'échange de chaleur par soudure au four, et ladite soudure au four utilisant une matière de soudure composée d'un alliage comprenant du bore. Selon l'invention, l'acier inoxydable ferritique de la bride comprend en outre un pourcentage de niobium apte à réagir avec l'azote contenu dans l'acier inoxydable ferritique proprement dit de manière à former des nitrures de niobium.

La formation des nitrures de niobium évite ainsi que l'azote ne réagisse avec le bore de la matière de soudure. Autrement dit, de cette manière, l'azote libre contenu dans l'acier inoxydable ferritique ayant réagi avec le niobium, il ne peut plus réagir avec le bore de la matière de soudure comme cela se produisait dans l'état de la technique. L'ajout de niobium permet donc d'éviter la formation de nitrures de bore de l'acier inoxydable ferritique. Il est donc possible d'obtenir une bonne résistance à l'oxydation et à la corrosion de l'acier et donc une soudure adéquate au four.

L'invention offre d'autres avantages par rapport à l'état de la technique, à savoir :
- L'acier inoxydable ferritique est relativement bon marché par rapport aux austénitiques.
- Les brides fabriquées à partir de l'alliage indiqué peuvent être soudées au four directement aux parties du faisceau d'échange de chaleur fabriquées en acier inoxydable austénitique, autrement dit les faisceaux de tubes, la carcasse, les plaques, etc.
- Les brides en acier inoxydable ferritique répondent aux exigences mécaniques et de corrosion conformément aux tests.

- Aucune précaution particulière n'est nécessaire pour définir les parties, ajustages ou tolérances, à l'inverse des produits actuels.
- Le procédé standard de soudure au four et la matière de soudure standard associée utilisés dans l'état de la technique peuvent toujours être utilisés sans grandes modifications.

Avantageusement, l'acier inoxydable ferritique de ladite bride comprend jusqu'à 1 % en poids de niobium.

De préférence, l'acier inoxydable ferritique de ladite bride est l'alliage de formulation 1.4511 (430Nb).

De préférence encore, la matière de soudure pour la soudure au four est l'alliage NI 102 (BNi2).

De préférence, le faisceau d'échange de chaleur est fabriqué à partir d'un acier inoxydable austénitique.

### BRÈVE DESCRIPTION DES DESSINS

Dans le but de faciliter la description de ce qui a été exposé précédemment, on joint des dessins dans lesquels est représenté, sous forme schématique et uniquement à titre d'exemple non limitatif, un cas pratique de réalisation de l'échangeur de chaleur de l'invention. Dans ces dessins :

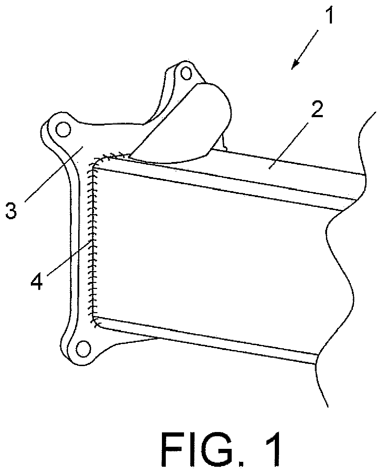

la figure 1 est une vue partielle en perspective d'un faisceau d'échange de chaleur métallique soudé au four avec une bride de raccord selon l'invention.

### DESCRIPTION D'UN MODE DE RÉALISATION PRÉFÉRÉ

En référence à la figure 1, l'échangeur de chaleur 1 pour gaz d'échappement d'un moteur comprend un faisceau d'échange de chaleur 2, destiné à la circulation des gaz avec échange de chaleur avec un fluide réfrigérant, et au moins une bride de raccord 3 à la ligne de recirculation de gaz.

D'une façon générale, le faisceau d'échange de chaleur 2 est fabriqué à partir d'un acier inoxydable austénitique alors que la bride 3 est fabriquée à partir d'un acier inoxydable ferritique, généralement l'acier AISI 430 ou AISI 409.

Le faisceau d'échange de chaleur 2 peut comprendre un réseau de tubes parallèles ou une pluralité de plaques empilées, et peut comporter également un réservoir de gaz au niveau d'au moins une des ses extrémités. Le faisceau d'échange de chaleur 2 peut être introduit dans une carcasse à l'intérieur de laquelle circule le fluide réfrigérant. La carcasse peut être jointe à la bride de raccord par des moyens mécaniques ou une soudure.

Ladite bride 3 est jointe en contact direct avec le faisceau d'échange de chaleur 2 par une soudure au four utilisant une matière de soudure 4 composée d'un alliage contenant du nickel ou du bore, usuellement le NI 102.

Les aciers inoxydables ferritiques, tels que l'acier AISI 430 ou AISI 409, contiennent une petite quantité d'azote, en quantité suffisante pour réagir avec le bore de la matière de soudure 4, en entravant ainsi la soudure au four.

Dans le but de remédier à ce problème, la présente invention prévoit d'ajouter à l'acier inoxydable ferritique de la bride 3 un pourcentage de niobium susceptible de réagir avec l'azote contenu dans l'acier inoxydable ferritique proprement dit, le niobium entraînant la formation de nitrures de niobium. L'azote n'étant plus libre, il ne peut plus réagir avec le bore de la matière de soudure 4. Il est ainsi possible d'éviter la formation de nitrures de bore de l'acier inoxydable ferritique.

Il est donc possible d'obtenir une bonne résistance à l'oxydation et à la corrosion de l'acier et donc une soudure adéquate au four. Dans ce cas, le faisceau d'échange de chaleur 2, la bride 3 et la matière de soudure 4 peuvent être exposés aux gaz d'échappement.

Dans le but de vérifier la présence d'azote, on réalise un test de mouillabilité de la matière de soudure 4 pour soudure au four sur un échantillon de manière à vérifier la compatibilité du matériau de base de la bride 3. À cette fin, de petites gouttes de pâte de soudure 4, d'environ 2 mm, sont placées à la surface de l'échantillon 3. L'échantillon est ensuite placé dans un four et soudé en utilisant le cycle standard de soudure au four en production.

Lorsque la matière de soudure 4 est suffisamment mouillée, les gouttes 4 se répandent largement sur la surface de l'échantillon de matériau. L'addition de niobium à l'alliage AISI 430 améliore donc considérablement la mouillabilité de la matière de soudure.

Or, une quelconque contamination du matériau de base 3 par de l'azote provoque une solidification de la pâte de soudure 4 dans le four, laquelle subsiste alors sur son site de dépôt sous forme de sphères et entrave ainsi le processus de soudure au four.

Dans le but de vérifier la présence d'azote, on procède à une analyse par microscopie électronique SEM.

Selon un mode de réalisation de l'invention, la bride 3 est fabriquée à partir de l'acier inoxydable ferritique AISI 430Nb, comprenant, en poids :
- d'environ 10 à 18 % de chrome,
- jusqu'à environ 0,05 % de carbone,
- jusqu'à environ 1 % de silicium,
- jusqu'à environ 1 % de manganèse,
- jusqu'à environ 0,04 % de phosphore,
- jusqu'à environ 0,04 % de sulfure,
- jusqu'à environ 0,05 % d'azote, et
- jusqu'à environ 1 % de niobium.

Cette composition correspond à l'alliage commercial 1.4511 (430Nb).

La matière de soudure 4 pour soudure au four est quant à elle composée de l'alliage de nickel, chrome, bore, silicium et fer, comprenant, en poids :
- d'environ 6 à 22 % de chrome,
- jusqu'à environ 3,5 % de bore,
- jusqu'à environ 5 % de silicium,
- jusqu'à environ 3,5 % de fer, et
- le reste étant du nickel.

Cette composition comprend l'alliage standard NI 102 (BNi2).

## Revendications

1. Échangeur de chaleur (1), notamment pour des gaz d'échappement recirculés d'un moteur, comprenant un faisceau d'échange de chaleur (2) fabriqué à partir d'un acier inoxydable, destiné à la circulation des gaz avec échange de chaleur avec un fluide réfrigérant, et au moins une bride (3) de raccord à la ligne de recirculation de gaz fabriquée à partir d'un acier inoxydable ferritique, ladite bride (3) étant assujettie audit faisceau d'échange de chaleur (2) par soudure au four, et ladite soudure au four utilisant une matière de soudure (4) composée d'un alliage comprenant du bore, **caractérisé en ce que** l'acier inoxydable ferritique de la bride (3) comprend en outre un pourcentage de niobium apte à réagir avec l'azote contenu dans l'acier inoxydable ferritique proprement dit de manière à former des nitrures de niobium.

2. Échangeur (1) selon la revendication 1, **caractérisé en ce que** l'acier inoxydable ferritique de ladite bride (3) comprend jusqu'à 1 % en poids de niobium.

3. Échangeur (1) selon la revendication 1 ou 2, **caractérisé en ce que** l'acier inoxydable ferritique de ladite bride (3) est l'alliage de formulation 1.4511 (430Nb).

4. Échangeur (1) selon selon l'une des revendications précédentes, **caractérisé en ce que** la matière de soudure (4) pour soudure au four est l'alliage NI 102 (BNi2).

5. Échangeur (1) selon l'une des revendications précédentes, **caractérisé en ce que** le faisceau d'échange de chaleur (2) est fabriqué à partir d'un acier inoxydable austénitique.

## Patentansprüche

1. Wärmetauscher (1), insbesondere für rückgeführte Abgase eines Motors, welcher ein aus einem rostfreien Stahl hergestelltes Wärmeaustauschbündel (2), das für die Zirkulation der Gase mit Austausch von Wärme mit einem Kältemittel bestimmt ist, und wenigstens einen Flansch (3) zum Anschluss an die Gasrückführungsleitung, der aus einem ferritischen rostfreien Stahl hergestellt ist, umfasst, wobei der Flansch (3) an dem Wärmeaustauschbündel (2) durch Ofenlöten befestigt ist und für das Ofenlöten ein Lötmaterial (4) verwendet wird, das aus einer Legierung besteht, welche Bor umfasst, **dadurch gekennzeichnet, dass** der ferritische rostfreie Stahl des Flansches (3) außerdem einen Anteil an Niob enthält, der geeignet ist, mit dem Stickstoff zu reagieren, der in dem eigentlichen ferritischen rostfreien Stahl enthalten ist, so dass Niobnitride gebildet werden.

2. Wärmetauscher (1) nach Anspruch 1, **dadurch gekennzeichnet, dass** der ferritische rostfreie Stahl des Flansches (3) bis zu 1 Gew.-% Niob enthält.

3. Wärmetauscher (1) nach Anspruch 1 oder 2, **dadurch gekennzeichnet, dass** der ferritische rostfreie Stahl des Flansches (3) die Legierung vom Typ 1.4511 (430Nb) ist.

4. Wärmetauscher (1) nach einem der vorhergehenden Ansprüche, **dadurch gekennzeichnet, dass** das Lötmaterial (4) für das Ofenlöten die Legierung NI 102 (BNi2) ist.

5. Wärmetauscher (1) nach einem der vorhergehenden Ansprüche, **dadurch gekennzeichnet, dass** das Wärmeaustauschbündel (2) aus einem austenitischen rostfreien Stahl hergestellt ist.

## Claims

1. Heat exchanger (1), notably for the recirculated exhaust gases of an engine, comprising a heat exchange core bundle (2) manufactured out of stainless steel, for the circulation of the gases with exchange of heat with a coolant fluid, and at least one flange (3) for connection to the gas recirculation line made out of a ferritic stainless steel, said flange (3) being secured to said heat exchange core bundle (2) by furnace welding, and said furnace welding using a welding material (4) made up of an alloy containing boron, **characterized in that** the ferritic stainless steel of the flange (3) also contains a percentage of niobium capable of reacting with the nitrogen contained in the actual ferritic stainless steel proper so as to form niobium nitrides.

2. Exchanger (1) according to Claim 1, **characterized in that** the ferritic stainless steel of said flange (3) contains up to 1 wt% niobium.

3. Exchanger (1) according to Claim 1 or 2, **characterized in that** the ferritic stainless steel of said flange (3) is the alloy of formulation 1.4511 (430Nb).

4. Exchanger (1) according to one of the preceding claims, **characterized in that** the welding material (4) for the furnace welding is the alloy NI 102 (BNi2).

5. Exchanger (1) according to one of the preceding claims, **characterized in that** the heat exchange core bundle (2) is manufactured out of an austenitic stainless steel.
